# EUROPEAN PATENT SPECIFICATION

(11) **EP 2 376 768 B1**
(45) Date of publication and mention of the grant of the patent: **09.04.2014**
(21) Application number: 09775266.1
(22) Date of filing: 10.12.2009
(51) Int. Cl.: F03B 13/26, F03B 13/10, B63B 35/44, F16L 1/20, F03B 17/06

(54) **SUBMERGED ELECTRICAL POWER GENERATING APPARATUS AND ACCESSORIES THEREFOR**
EINGETAUCHTE VORRICHTUNG ZUR ERZEUGUNG VON ELEKTRISCHER ENERGIE UND ZUBEHÖR DAFÜR
DISPOSITIF DE GÉNÉRATION DE COURANT ÉLECTRIQUE IMMERGÉ ET ACCESSOIRES POUR CELUI-CI

(30) Priority: 18.12.2008 GB 0823062
(43) Date of publication of application: 19.10.2011
(73) Proprietor: Gurit (UK) Limited, Newport Isle of Wight P030 5WU (GB)
(72) Inventor: PEARCE, Colin Richard, North Yorkshire TS9 5QA (GB); FARRELLY, Justin Nicholas, Carrollton Texas 75010 (US)
(74) Representative: Jenkins, Peter David
(86) International application number: PCT/GB2009/051678
(87) International publication number: WO 2010/070322

(56) References cited:
- WO-A2-2008/081187
- GB-A- 2 180 809
- GB-A- 2 431 628
- GB-A- 2 447 774
- US-A1- 2007 231 072

## Description

The present invention relates to accessories for underwater electrical power generating apparatus, and relates particularly, but not exclusively, to accessories for apparatus for generating electricity from tidal and constant marine currents.

An apparatus for generating electricity from water flow is disclosed in International patent application WO2008/081187. The apparatus is typically mounted to a flexible anchor chain at a desired depth underwater, and flow of water through the turbine of the apparatus causes electrical power to be generated, which can be taken off by means of one or more electrical cables extending from the apparatus.

This arrangement suffers from the drawback that it requires a subsea pulley system in order to deploy the generator to its operating location, and a separate surface operated release mechanism. This increases the cost and complexity of the apparatus.

This arrangement also suffers from the disadvantage that cables extending from the generator apparatus are under certain circumstances prone to damage as a result of water movement moving the cables against the sea floor. In order to overcome this problem, it is sometimes necessary to bury the cable in the sea floor, which is often expensive and difficult and may not always be possible, for example in the case of the sea floor being of hard rock.

The known arrangement suffers from the further disadvantage that the performance of the electricity generating apparatus is very sensitive to variations in water flow rate, as a result of which inlets and outlets to the generating apparatus have to be specially designed for the conditions experienced by the apparatus. This significantly increases the cost of manufacture of the apparatus.

Further examples of the prior art are disclosed in UK Patent application publications GB 2431628, GB 2447774 and GB 2180809 and in US Patent application publication US 2007/231072.

Preferred embodiments of the present invention seek to overcome one or more of the above disadvantages.

According to an aspect of the present invention, there is provided a deployment device for deploying a buoyant apparatus to a submerged location in a body of water, the deployment device comprising:-
winding means adapted to be mounted to the buoyant apparatus and adapted to engage an anchor member fixed to a floor of the body of water and to move along said anchor member in a first direction to move the buoyant apparatus to said submerged location; and
locking means having a locked condition in which movement of the winding means along the anchor member in a second direction, opposite to said first direction, is prevented when the locking means is at a predetermined location on said anchor member, and an unlocked condition in which said winding means can move along the anchor member in said second direction characterised in that the locking means comprises a pair of first engaging members adapted to engage at least one stop member on said anchor member to prevent movement of at least one said stop member between said first engaging members, wherein said first engaging members are adapted to be moved further apart to allow movement of at least one said stop member past said first engaging members.

By providing winding means adapted to be mounted to the generating apparatus and adapted to engage an anchor member fixed to a floor of the body of water and to move along said anchor member in a first direction to move the generating apparatus to the submerged location, this provides the advantage of providing a simpler, less costly deployment device, which is easier to maintain, since it can be retrieved and maintained and/or repaired at the same time as the generator apparatus.

The locking means may further comprise release means for moving said first engaging members further apart to allow movement of at least one said stop member past said first engaging members.

The release means may further comprise at least one second engaging member adapted to protrude from a housing of the deployment device for moving said first engaging members further apart.

By providing at least one second engaging member adapted to protrude from a housing of the deployment device for moving said first engaging members further apart, this provides the advantage of providing a backup release mechanism if the main release mechanism should fail.

The first engaging members may be biased towards each other.

The device may further comprise deactivating means for deactivating said winding means when the deployment device reaches a predetermined position on said anchor member.

The deactivating means may be adapted to be activated by engagement by at least one stop member on said anchor member.

The winding means may be operable remotely from the device.

The winding means may include a drum for receiving part of said anchor member and/or a flexible winding member extending from said anchor member.

The device may further comprise braking means for resisting movement of the device along the anchor member in said second direction.

The braking means may comprise at least one third engaging member adapted to engage said drum.

The braking means may be adapted to be deactivated by means of said release means.

At least one said third engaging member may be adapted to be disengaged from the drum by means of at least one said second engagement member.

This provides the advantage of making the release mechanism easy to operate.

The device may further comprise feeding means for feeding at least one electrical cable connected to the buoyant apparatus into a storage portion of the device.

This provides the advantage of minimising the risk of damage to electrical cables connected to the generator apparatus, but minimising the length of loose cable.

The feeder means may be connected to said winding means.

This provides the advantage of synchronising operation of the feeder means and winding means, which simplifies the construction of the deployment device.

According to another aspect of the present invention, there is provided an electricity generating apparatus including at least one deployment device as defined above.

According to a further aspect of the present invention, there is provided a connection pod for electrical connection to an electricity generating apparatus, the connection pod including at least one deployment device as defined above.

Preferred embodiments of the invention will now be described, by way of example only and not in any limitative sense, with reference to the accompanying drawings, in which:-
Figure 1 is an end view of an underwater electricity generating apparatus embodying an aspect of the present invention;
Figure 2 is a perspective view of the apparatus of Figure 1;
Figure 3 is a side cross sectional view of a deployment device of the apparatus of Figures 1 and 2; and
Figures 4 to 9 illustrate the operation of the deployment device of Figure 3.

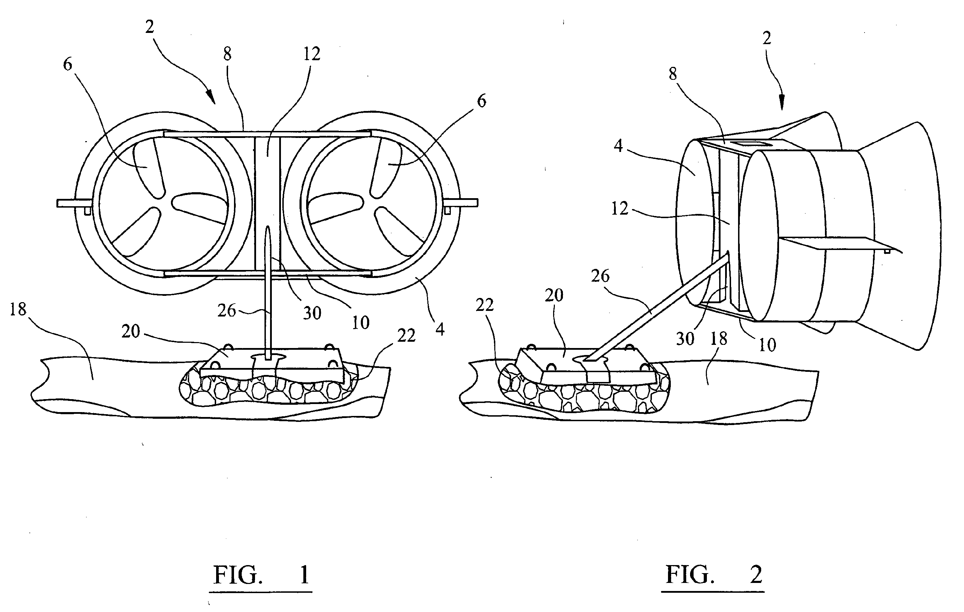

Referring to Figures 1 and 2, an underwater electricity generating apparatus 2 of the type shown in International patent application WO2008/081187 comprises a pair of counter-rotating turbines 4 having inwardly directed turbine blades 6. The detailed operation of the turbines 4 is not relevant to the present invention and will therefore not be described in greater detail herein.

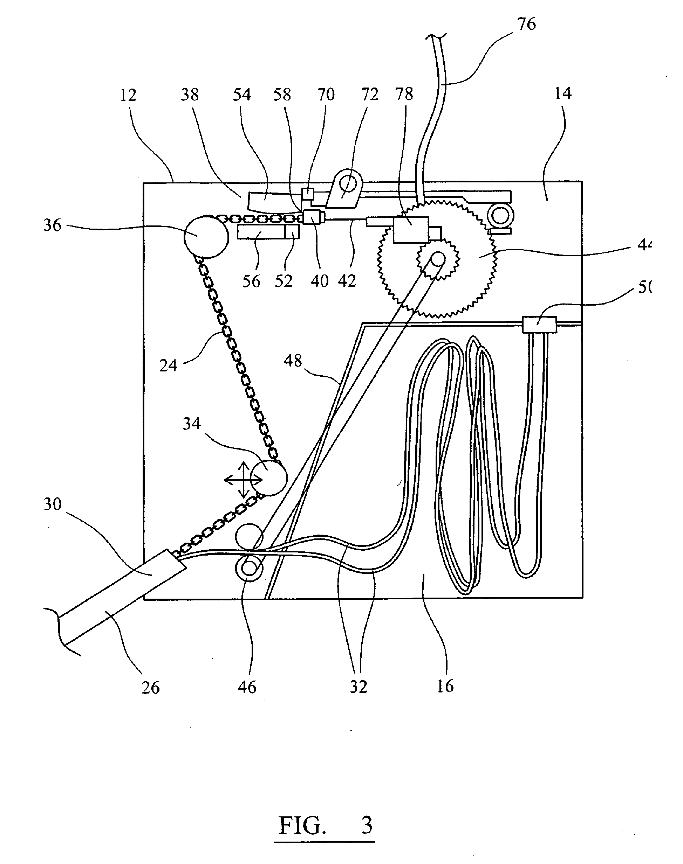

The turbines 4 are connected by means of a pair of horizontal connection foils 8, 10 which are in turn connected by means of a central vertical housing 12 containing a winding apparatus 14 and cable storage compartment 16 (Figure 3). The generating apparatus 2 is anchored to the sea floor 18 by means of a gravity based anchor 20, to which rocks 22 are added for further stability. The apparatus 2 is anchored to the anchor 20 by means of a flexible anchor chain 24 (Figure 3) located within a chain guard 26, which will be described in greater detail below with reference to Figures 24 to 26. The generator apparatus 2 is positively buoyant, and therefore floats within the water column at a height determined by the length of the chain 24 and any net forces (for example drag) acting on the apparatus 2 and chain guard 26 as a result of tidal or other current acting to pull the generator apparatus 2 downwards.

Referring to Figure 3, the chain guard enters the vertical housing 12 through an access slot 30 where the anchor chain 24 and one or more electrical cables 32 connected to the generator apparatus 2 emerge from the chain guard 26. The chain 24 passes around an anchor point 34 and a secondary feeding pulley 36, through a locking mechanism 38 and engagement of a stop 40 connecting an end of the chain 24 to a retrieval cable 42 prevents removal of the chain 24 from the housing 12. The retrieval cable 42 is wrapped around a drum 44 of the winding apparatus 14. The electrical cables 32 pass between squirter rollers 46 which are connected by means of a chain 48 to an axle of the drum 44, and pass through storage compartment 16 to a suitable connection point 50.

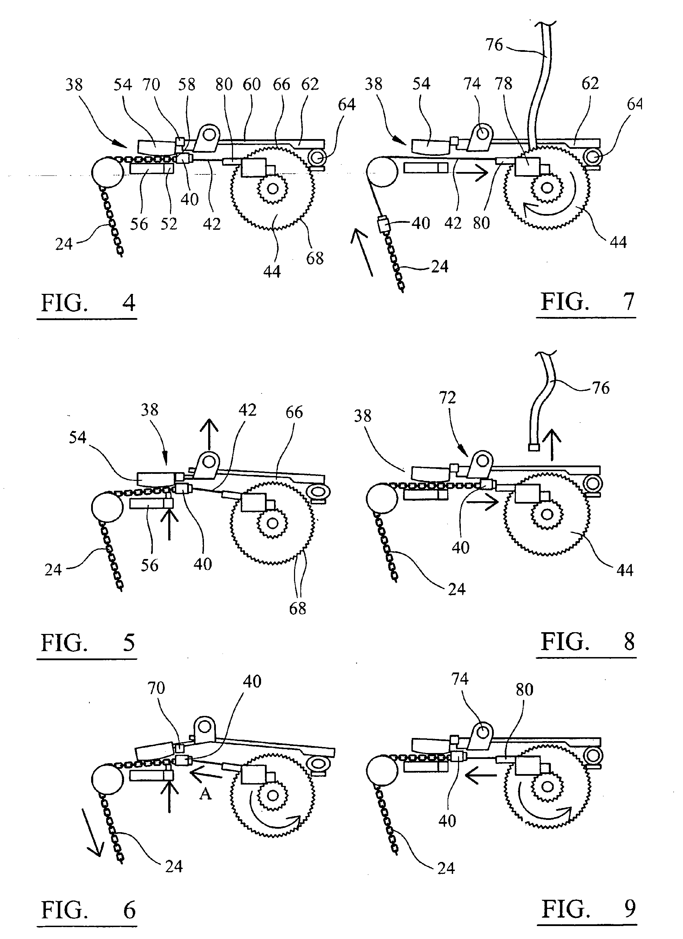

Referring to Figures 3 to 6, in order to release the generating apparatus 2 from the anchor chain 24 so that it can rise to the water surface, a suitable remotely operable lifting mechanism 52 such as a bottle jack or worm jack is remotely activated to lift an upper part 54 of the locking mechanism 38, which in turn raises the stop 40 on the chain 24 out of engagement with a lower part 56 of the locking mechanism 38, as a result of engagement of the stop 40 with a raised nodule 58 on the upper part 54 of the locking mechanism 38 as shown in Figure 5. At the same time, a brake member 60 pivots about pivot point 62 out of engagement with the outer periphery of the drum 44, and compresses a rubber fitting 64 which normally expands to bias a tooth 66 of the brake member 60 into engagement with one or more teeth 68 on the external periphery of the drum 44.

With continued upward movement of the upper part 54 of the locking mechanism 38 under the action of lifting mechanism 52, the stop 40 engages a fixed obstruction 70 which prevents further upward movement of the stop 40 but does not prevent further upward movement of the upper part 54 of the locking mechanism 38, as a result of which the stop 40 disengages from the nodule 58 on the upper part 54 of the locking mechanism 38. At the same time, the upper 54 and lower 56 parts of the locking mechanism 38 are sufficiently separated to allow the stop 40 to pass between the upper and lower parts 54, 56 in the direction of arrow A shown in Figure 6, as a result of which the generating apparatus 2 can move towards the water surface under its own buoyancy, and the anchor chain 24, stop 40 and retrieval cable 42 pass out of the slot 30 in the vertical housing 12. The rate of ascent of the generator apparatus 2 is controlled by engagement of the brake member 60 with the outer periphery of the drum 44 under the action of the compressed rubber fitting 64 when the lifting mechanism 52 is released.

In the event of failure of the remotely controlled lifting mechanism 52, a backup release mechanism 72 is provided by means of a lifting point 74 connected directly to the upper part 54 of the locking mechanism 38 and which protrudes through an aperture in the upper surface of the housing 12. This enables attachment of a lifting hook such as a snatch hook, and a small lifting force releases the locking mechanism 38, which allows passage of the anchor chain 24 and stop 40 and allows the generator apparatus 2 to rise to the water surface. The weight of the upper part 54 of the locking mechanism 38 will normally prevent accidental activation of the backup release mechanism 72. Because of the connection of the drum 44 and squirter rollers 46 via the chain 48, as the anchor chain 24 and retrieval cable 42 are fed out of the housing 12, the electrical cables 32 are also fed out of the housing 12.

When the generator apparatus 2 reaches the water surface, it can be lifted onto the back deck of a suitable surface vessel (not shown) and the retrieval cable 42 and electrical cables 32 can be disconnected from the generator apparatus 2 in relative safety on board the vessel and the generator 2 removed to shore for maintenance, inspection, repair or the like. During the temporary absence of the generator apparatus 2, an alternative generator (not shown) can be substituted and deployed, or dummy connections made to the electrical cables 32 and the retrieval cable 42 and these then secured temporarily to a buoy or the like for subsequent reconnection to the repaired generator apparatus 2.

Referring to Figures 3 and 7 to 9, in order to redeploy the generator device 2 to its submerged location, while on the deck of the surface vessel the electrical cables 32 and retrieval cable 42 are reconnected to the generator 2 and a suitable power source (not shown) such as a hydraulic, pneumatic or electrical power source is connected via a hose 76 or electrical cable to a hydraulic motor drive 78 connected to the drum 44. The generator 2 is then lifted overboard into the water, and power supplied via the hose 76 or cable to the motor drive 78, as a result of which the motor drive 78 causes the drum 44 to rotate to pull the retrieval cable 42, and subsequently the anchor chain 24, into the housing 12 to submerge the generator 2.

Eventually, the stop 40 passes through the locking mechanism 38 by displacing the upper part 54 of the locking mechanism 38, and the upper part 54 of the locking mechanism 38 then returns under its own weight after passage of the stop 40 to prevent passage of the stop 40 in the opposite direction to thereby prevent removal of the stop 40 from the housing 12. The stop 40 then engages a hydraulic release button 80 which deactivates the motor drive 78 and/or releases the power source, and the resulting lack of hydraulic pressure allows the winding apparatus 14 to relax and the stop 40 to secure itself against the locking mechanism 38 under the action of the buoyancy of the generator apparatus 4. The brake member 60 maintains a small tension on the retrieval cable 42 and prevents further relaxation of the winding apparatus 14 to secure the retrieval cable 42 on the drum 44. During rotation of the drum 44, the squirter rollers 46 rotate in synchronism with the drum 44 as a result of the chain 48, which reels in the electrical cables 32 into the storage compartment 16.

It will be appreciated by persons skilled in the art that since the retrieval cable 42 is only used for redeploying the generator apparatus 2, it only requires sufficient strength to overcome the buoyancy of the generator apparatus 2. As a result, the retrieval cable 42 can be of lower strength than the anchor chain 24. This enables a reduction in weight and cost.

It will be appreciated by persons skilled in the art that the above embodiments have been described by way of example only, and not in any limitative sense, and that various alterations and modifications are possible without departure from the scope of the invention as defined by the appended claims.

## Claims

1. A deployment device for deploying a buoyant apparatus to a submerged location in a body of water, the deployment device comprising:-
winding means (14) adapted to be mounted to the buoyant apparatus (2) and adapted to engage an anchor member (20) fixed to a floor of the body of water and to move along said anchor member in a first direction to move the buoyant apparatus to said submerged location; and
locking means (38) having a locked condition in which movement of the winding means along the anchor member in a second direction, opposite to said first direction, is prevented when the locking means is at a predetermined location on said anchor member, and an unlocked condition in which said winding means can move along the anchor member in said second direction **characterised in that** the locking means comprises a pair of first engaging members (54, 56) adapted to engage at least one stop member (40) on said anchor member to prevent movement of at least one said stop member between said first engaging members, wherein said first engaging members are adapted to be moved further apart to allow movement of at least one said stop member past said first engaging members.

2. A deployment device according to claim 1, including one or more of the following features:
(i) further comprising deactivating means (80) for deactivating said winding means (14) when the deployment device reaches a predetermined position on said anchor member (20);
(ii) wherein the winding means (14) is operable remotely from the device;
(iii) wherein the winding means (14) includes a drum (44) for receiving part of said anchor member (20) and/or a flexible winding member (24) extending from said anchor member;
(iv) further comprising braking means (60) for resisting movement of the device along the anchor member (20) in said second direction; or
(v) further comprising feeding means (46) for feeding at least one electrical cable (32) connected to the buoyant apparatus (2) into a storage portion (16) of the device.

3. A deployment device according to claim 2, including one or more of the following features:
(i) wherein the locking means (38) further comprises release means for moving said first engaging members (54, 56) further apart to allow movement of at least one said stop member (40) past said first engaging members;
(ii) wherein the first engaging members (54, 56) are biased towards each other;
(iii) wherein the deactivating means (80) is adapted to be activated by engagement by at least one stop member (40) on said anchor member (20);
(iv) wherein the braking means (60) comprises at least one third engaging member (66) adapted to engage said drum (44); or
(v) wherein the feeder means (46) is connected to said winding means (14).

4. A deployment device according to claim 3, wherein the release means further comprises at least one second engaging member (74) adapted to protrude from a housing (12) of the deployment device for moving said first engaging members (54, 56) further apart.

5. A deployment device according to claim 2 and 3 or 4, wherein the braking means (60) is adapted to be deactivated by means of said release means.

6. A deployment device according to claims 3 and 4, wherein at least one said third engaging member (66) is adapted to be disengaged from the drum by means of at least one said second engagement member (74).

7. An electricity generating apparatus (2) including at least one deployment device according to any one of the preceding claims.

8. A connection pod for electrical connection to an underwater electricity generating apparatus (2), the connection pod including at least one deployment device according to any one of claims 1 to 6.

## Patentansprüche

1. Ein Einsatzgerät zum Einsetzen einer Schwimmvorrichtung an einem Unterwasserstandort eines Gewässers, wobei das Einsatzgerät Folgendes umfasst:
Windemittel (14), das zum Montieren an der Schwimmvorrichtung (2) und zum Eingreifen in ein am Gewässergrund befestigtes Ankerelement (20) sowie dazu geeignet ist, sich am besagten Ankerelement entlang in eine erste Richtung zu bewegen, um die besagte Schwimmvorrichtung an den besagten Unterwasserstandort zu bewegen; und
Verriegelungsmittel (38), das einen verriegelten Zustand hat, in welchem die am Ankerelement entlang führende Bewegung des Windemittels in eine der besagten ersten Richtung entgegen gesetzte zweite Richtung verhindert ist, wenn sich das Verriegelungsmittel an einer vorbestimmten Stelle des besagten Ankerelements befindet, wobei das Verriegelungsmittel einen unverriegelten Zustand hat, in welchem sich das besagte Windemittel am Ankerelement entlang in die besagte zweite Richtung bewegen kann, **dadurch gekennzeichnet, dass** das Verriegelungsmittel ein Paar erster Eingriffselemente (54, 56) umfasst, die in zumindest ein Stoppelement (40) am besagten Ankerelement eingreifen können, um zu verhindern, dass sich das zumindest eine besagte Stoppelement zwischen den besagten ersten Eingriffselementen bewegen kann, wobei die besagten ersten Eingriffselemente weiter auseinander gerückt werden können, damit sich zumindest ein besagtes Stoppelement an den besagten ersten Eingriffselementen vorbei bewegen kann.

2. Ein Anspruch 1 entsprechendes Einsatzgerät, das eines oder mehrere der folgenden Merkmale aufweist:
(i) es umfasst ferner Deaktivierungsmittel (80), um das besagte Windemittel (14) zu deaktivieren, sobald das Einsatzgerät eine vorbestimmte Position am besagten Ankerelement (20) erreicht;
(ii) wobei das Windemittel (14) vom Gerät zur Fernbedienung eingesetzt werden kann;
(iii) wobei das Windemittel (14) eine Trommel (44) zum Aufnehmen eines Teils des besagten Ankerelements (20) und/oder eines flexiblen Windeelements (24) umfasst, das sich vom besagten Ankerelement erstreckt;
(iv) wobei es ferner Bremsmittel (60) umfasst, um der am Ankerelement (20) entlang führenden Bewegung des Geräts in die besagte zweite Richtung zu widerstehen; oder
(v) wobei es ferner Zuführungsmittel (46) umfasst, um zumindest ein an der Schwimmvorrichtung (2) angeschlossenes elektrisches Kabel (32) einem Speicherbereich (16) im Gerät zuzuführen.

3. Ein Anspruch 2 entsprechendes Einsatzgerät, das eines oder mehrere der folgenden Merkmale aufweist:
(i) wobei das Verriegelungsmittel (38) ferner Freisetzungsmittel umfasst, um die besagten ersten Eingriffselemente (54, 56) weiter auseinander zu rücken, damit sich zumindest ein besagtes Stoppelement (40) an den besagten ersten Eingriffselementen vorbei bewegen kann;
(ii) wobei die ersten Eingriffselemente (54, 56) zueinander vorgespannt sind;
(iii) wobei das Deaktivierungsmittel (80) durch den Eingriff zumindest eines Stoppelements (40) am besagten Ankerelement (20) aktiviert werden kann;
(iv) wobei das Bremsmittel (60) zumindest ein drittes Eingriffselement (66) umfasst, um in die besagte Trommel (44) eingreifen zu können; oder
(v) wobei das Zuführungsmittel (46) mit dem besagten Windemittel (14) verbunden ist.

4. Ein Anspruch 3 entsprechendes Einsatzgerät, wobei das Freisetzungsmittel ferner zumindest ein zweites Eingriffselement (74) umfasst, das angepasst ist, um aus einem Gehäuse (12) des Einsatzgeräts heraus zu ragen, damit die besagten ersten Eingriffselemente (54, 56) noch weiter auseinander gerückt werden können.

5. Ein Ansprüchen 2 und 3 oder 4 entsprechendes Einsatzgerät, dessen Bremsmittel (60) geeignet ist, mittels des besagten Freisetzungsmittels deaktiviert zu werden.

6. Ein Ansprüchen 3 und 4 entsprechendes Einsatzgerät, wobei zumindest ein besagtes drittes Eingriffselement (66) geeignet ist, mittels des zumindest einen besagten zweiten Eingriffselements (74) von der Trommel ausgerückt zu werden.

7. Ein stromerzeugendes Gerät (2), das zumindest ein vorstehenden Ansprüchen entsprechendes Einsatzgerät umfasst.

8. Ein Anschlussblock zum elektrischen Anschluss an ein stromerzeugendes Unterwassergerät (2), wobei der Anschlussblock zumindest ein Einsatzgerät umfasst, das einem der Ansprüche 1 bis 6 entspricht.

## Revendications

1. Un dispositif de déploiement pour déployer un appareil flottant à un endroit immergé dans une masse d'eau, le dispositif de déploiement comprenant :-
des moyens d'enroulement (14) conçus pour être montés sur l'appareil flottant (2) et conçus pour se mettre en prise avec un élément d'ancrage (20) fixé à un fond de la masse d'eau et se déplacer le long dudit élément d'ancrage dans une première direction afin de déplacer l'appareil flottant au dit site immergé ; et
des moyens de verrouillage (38) possédant un état verrouillé dans lequel le mouvement des moyens d'enroulement le long de l'élément d'ancrage dans une seconde direction, opposée à ladite première direction, est bloqué lorsque les moyens de verrouillage se trouvent à une position prédéterminée sur ledit élément d'ancrage, et un état non verrouillé dans lequel lesdits moyens d'enroulement peuvent se déplacer le long des moyens d'ancrage dans ladite seconde direction **caractérisé en ce que** les moyens de verrouillage comprennent une paire de premiers éléments de mise en prise (54, 56) conçus pour se mettre en prise avec au moins un élément d'arrêt (40) sur ledit élément d'ancrage pour bloquer le mouvement d'au moins un dudit élément d'arrêt entre lesdits premiers éléments de mise en prise, dans lequel lesdits premiers éléments de mise en prise sont conçus pour être plus écartés l'un de l'autre pour permettre le mouvement d'au moins un dudit élément d'arrêt devant lesdits premiers éléments de mise en prise.

2. Un dispositif de déploiement selon la revendication 1, comprenant une ou plusieurs des caractéristiques suivantes :
(i) comprenant en outre des moyens de désactivation (80) pour désactiver lesdits moyens d'enroulement (14) lorsque le dispositif de déploiement atteint une position prédéterminée sur ledit élément d'ancrage (20) ;
(ii) dans lequel les moyens d'enroulement (14) fonctionnent à distance du dispositif ;
(iii) dans lequel les moyens d'enroulement (14) comprennent un tambour (44) pour recevoir une partie dudit élément d'ancrage (20) et/ou un élément d'enroulement flexible (24) s'étendant dudit élément d'ancrage ;
(iv) comprenant en outre des moyens de freinage (60) pour faire résistance au mouvement du dispositif le long de l'élément d'ancrage (20) dans ladite seconde direction ; ou
(v) comprenant en outre des moyens d'alimentation (46) pour alimenter au moins un câble électrique (32) connecté à l'appareil flottant (2) dans une partie de stockage (16) du dispositif.

3. Un dispositif de déploiement selon la revendication 2, comprenant une ou plusieurs des caractéristiques suivantes :
(i) dans lequel les moyens de verrouillage (38) comprennent en outre des moyens de libération pour écarter plus l'un de l'autre lesdits éléments de mise en prise (54, 56) pour permettre le mouvement d'au moins un dudit élément d'arrêt (40) devant lesdits premiers éléments de mise en prise ;
(ii) dans lequel les premiers éléments de mise en prise (54, 56) sont en biais l'un par rapport à l'autre ;
(iii) dans lequel lesdits moyens de désactivation (80) sont conçus pour être activés par mise en prise par au moins un élément d'arrêt (40) sur ledit élément d'ancrage (20) ;
(iv) dans lequel les moyens de freinage (60) comprennent au moins un troisième élément de mise en prise (66) conçu pour mettre en prise ledit tambour (44) ; ou
(v) dans lequel les moyens d'alimentation (46) sont connectés auxdits moyens d'enroulement (14).

4. Un dispositif de déploiement selon la revendication 3, dans lequel les moyens de libération comprennent en outre au moins un second élément de mise en prise (74) conçu pour faire saillie d'un logement (12) du dispositif de déploiement pour écarter plus l'un de l'autre lesdits premiers éléments de mise en prise (54, 56).

5. Un dispositif de déploiement selon les revendications 2 et 3 ou 4, dans lequel les moyens de freinage (60) sont conçus pour être désactivés au moyen desdits moyens de libération.

6. Un dispositif de déploiement selon les revendications 3 et 4, dans lequel au moins un dudit troisième élément de mise en prise (66) est conçu pour être libéré du tambour au moyen d'au moins un dudit second élément de mise en prise (74).

7. Un appareil de génération d'électricité (2) comprenant au moins un dispositif de déploiement selon l'une quelconque des revendications précédentes.

8. Un boîtier de connexion pour une connexion électrique à un appareil de génération d'électricité sous l'eau (2), le boîtier de connexion comprenant au moins un dispositif de déploiement selon l'une quelconque des revendications de 1 à 6.
